# EUROPÄISCHE PATENTANMELDUNG

(11) **EP 3 020 652 A1**
(43) Veröffentlichungstag der Anmeldung: **18.05.2016**
(21) Anmeldenummer: 14193290.5
(22) Anmeldetag: 14.11.2014
(51) Int. Cl.: B65D 65/42, C09D 7/12, C09D 129/04, D21H 19/40, C08K 3/34

(54) **Verpackungsmaterial**

(71) Anmelder: Reno de Medici S.p.A., 20135 Milano (IT)
(72) Erfinder: SANDROCK, Rainer, 59821 Arnsberg (DE); BROCHU, Charles, Sherbrooke, (Quebec) J1J 1M4 (CA); GAUDREAULT, Roger, Montréal H2J 3M5 (CA)
(74) Vertreter: Graefe, Jörg

(57) **Zusammenfassung**

Die Erfindung betrifft ein Verpackungsmaterial (100) für ein Verpackungsgut, umfassend ein Substrat (101) und eine Beschichtung (104), wobei das Substrat (101) eine Außenseite (102) und eine Innenseite (103) aufweist, wobei die Beschichtung (104) auf der Innenseite (103) des Substrats (101) angeordnet ist, wobei die Beschichtung (104) aus einem Beschichtungsmaterial besteht, das Feststoffe umfasst, wobei der Anteil der Feststoffe am Beschichtungsmaterial mindestens 30%, beträgt

## Beschreibung

Die vorliegende Erfindung betrifft ein Verpackungsmaterial für ein Verpackungsgut, eine Verpackung und ein Verfahren zur Herstellung des Verpackungsmaterials.

Verpackungsmaterialien, insbesondere solche, die auf Cellulose basieren, werden häufig für die Verpackung von Lebensmitteln verwendet. Wenn das Verpackungsmaterial Mineralöl enthält, beispielsweise aufgrund einer Verwendung von Altpapier bei der Herstellung des Verpackungsmaterials, besteht die Gefahr, dass diese Mineralöle zu dem verpackten Lebensmittel gelangen und sich dort anreichern.

Um dies zu vermeiden sind im Stand der Technik Verfahren bekannt, bei denen das Verpackungsmaterial auf der dem Verpackungsgut zugewandten Seite mit einer Beschichtung versehen wird, die das Verpackungsgut vor den Mineralölen schützen soll. Ein derartiges Verfahren ist beispielsweise aus der WO 2012/168433 A1 bekannt.

Demgegenüber liegt der Erfindung die Aufgabe zugrunde, ein einfacher und günstiger herzustellendes Verpackungsmaterial, eine solche Verpackung und ein solches Verfahren zu schaffen.

Diese Aufgabe wird durch ein Verpackungsmaterial, eine Verpackung und ein Verfahren gemäß der unabhängigen Ansprüche geschaffen. Ausführungsformen der Erfindung sind in den unabhängigen Ansprüchen angegeben.

Das Verpackungsmaterial umfasst ein Substrat und eine Beschichtung. Das Substrat kann beispielsweise ein Papierprodukt sein. Das Substrat weist eine Außenseite und eine Innenseite auf. Dabei wird unter der Außenseite die Seite verstanden, die dazu ausgebildet ist, von dem Verpackungsgut abgewandt zu sein. Die Innenseite ist die Seite, die dazu ausgebildet ist, dem Verpackungsgut zugewandt zu sein. Die Beschichtung ist auf der Innenseite des Substrats angeordnet.

Die Beschichtung besteht aus einem Beschichtungsmaterial, das Feststoffe umfasst.

Erfindungsgemäß ist vorgesehen, dass der Anteil der Feststoffe am Beschichtungsmaterial mindestens 30% beträgt. Unter dem Anteil wird hier insbesondere der Gewichtsanteil verstanden. Vorzugsweise liegt der Anteil der Feststoffe am Beschichtungsmaterial zwischen 30% und 60%. Insbesondere ein Anteil der Feststoffe am Beschichtungsmaterial von zumindest 35% oder sogar mindestens 40% ist besonders vorteilhaft.

Der im Vergleich zur WO 2012/168433 A1 relativ hohe Feststoffanteil hat den Vorteil, dass das Beschichtungsmaterial schneller trocknet. Dadurch lässt sich das Verpackungsmaterial kostengünstiger herstellen.

Alternativ oder zusätzlich kann das Beschichtungsmaterial ein Bindemittel umfassen. Das Bindemittel kann insbesondere ein polares Bindemittel sein. Das Bindemittel kann einen Polyvinylalkohol und eine Polymerdispersion umfassen. Der Polyvinylalkohol kann mit der Polymerdispersion mischbar sein. Unter dem Begriff "mischbar" wird hier insbesondere verstanden, dass sich bei Mischung des Polyvinylalkohols mit der Polymerdispersion eine homogene Phase bildet. Die Verwendung des Polyvinylalkohols ist insbesondere vorteilhaft, damit die unter Umständen im Substrat enthaltenen Mineralöle von der Beschichtung blockiert werden, sodass sie nicht an das Verpackungsgut gelangen. Durch die Polymerdispersion können die Eigenschaften der Mischung aus dem Polyvinylalkohol und der Polymerdispersion beeinflusst werden. Als Polymerdisperionen können beispielsweise Ethylen-Vinylacetat, Butylacrylat-Vinylacetat, Ehtylen-acrylsäure, Ehtylen-methacrylsäure, Styrol-acrylsäure, Styrolmethacrylsäure, Hydroxiethylacrylat, Hydroxyethylmethacrylat, Styrol-Butadien-Hydroximethacrylat und/oder Styrol-Butadien-Hydroxyacrylat verwendet werden.

Nach einer Ausführungsform der Erfindung kann das Beschichtungsmaterial ein Vernetzungsmittel umfassen, das zusammen mit dem Polyvinylalkohol ein Netzwerk bildet. Dieses Netzwerk dient ebenfalls dazu, die Gefahr einer Kontamination des Verpackungsguts mit Mineralölen zu verringern.

Nach einer Ausführungsform der Erfindung kann das Vernetzungsmittel Vinyltrimethoxysilane, Vinyltrimethoxyethoxysilane, Methacryloxypropyltrimethoxysilane, Acryloxypropyltrimethoxysilane, N-Methylolmethacrylamid, t-Butylacetoacetat und/oder ein Polyamidoaminepichlorhydrinharz umfassen.

Der Polyvinylkalkohol kann durch Polymerisation mit Vinyltrimethoxysilane, Vinyltrimethoxyethoxysilane, Methacryloxypropyltrimethoxysilane und/oder Acryloxypropyltrimethoxysilane in wässriger Lösung unter Verwendung von 2,2'-Azobisdihydrochlorid und/oder 2,2'-Azobis2-methylproprionamidinedihydrochlorid modifiziert werden. Es entsteht ein Polymernetzwerk aus Polyvinlyalkohol mit Polysilannebengruppen. Die Polysilannebengruppen können bürstenartig ausgebildet sein. Durch langsame Hydrolyse unter Abspaltung von Methanol und/oder Ethanol entstehen Silanolgruppen, die zu Siloxangruppen weiterreagieren. Auf diese Weise entsteht ein Netzwerk von Polysiloxan und Polyvinylalkoholketten. Wenn die Lösungen einen alkalischen pH-Wert aufweisen, bilden sich teilweise Silanolgruppen zurück. Während der Trocknung des Polysilanvinylalkoholprodukts, kommt es aufgrund der pH-Wert-Verschiebung in Richtung zum Neutralpunkt zur Vernetzung unter Bildung von Siloxangruppen.

Der Polyvinylalkohol kann mit N-Methylolmethacrylamid unter Verwendung von 2-2'-Azobisdihydrochloride und/oder 2-2'-Azobis-2-methylpropionamidinedihydrochloride modifiziert werden, sodass ein bei höherer Temperatur sowie im leicht sauren pH-Bereich zwischen 4 und 7 vernetzbares Polymer erhalten wird. Alternativ oder zusätzlich kann der Polyvinylalkohol durch Umsetzung mit t-Butylacetoacetat acetoacetyliert werden. Es entsteht ein selbstvernetzendes Produkt. Mittels eines Polyamidoaminepichlorhydrinharz können noch höhere Vernetzungsdichten erreicht werden.

Nach einer Ausführungsform der Erfindung können die Feststoffe Pigmente umfassen. Das Verhältnis zwischen den Pigmenten und dem Polyvinylalkohol kann zumindest 1:1, vorzugsweise zumindest 1,5:1, betragen. Das Verhältnis kann sich insbesondere auf das Gewicht der beiden zueinander ins Verhältnis gesetzten Komponenten beziehen. Es ist also möglich, dass das Gewicht der Pigmente genauso hoch oder höher ist als das des Polyvinylalkohols. Insbesondere kann das Gewicht der Pigmente 1,5-mal so hoch sein wie das des Polyvinylalkohols. Auch ein Gewichtsverhältnis der Pigmente zum Polyvinylalkohol von mindestens 2:1 ist möglich. Durch diesen relativ hohen Anteil der Pigmente kann ein kostengünstigeres Verpackungsmaterial hergestellt werden. Insbesondere wird erreicht, dass das Beschichtungsmaterial nicht so schnell und nicht so weit in das Substrat eindringt, wodurch geringere Mengen des Beschichtungsmaterials benötigt werden. Auf diese Weise werden Ressourcen und die Umwelt geschont.

Nach einer Ausführungsform der Erfindung können die Pigmente Kaolinplättchen und/oder Talkplättchen umfassen, bei denen das Verhältnis der Durchmesser der Plättchen zu ihren Dicken mindestens 50 ist. Es handelt sich also um relativ flache Teilchen, die auch als "platy clay" bzw. "platy talc" bekannt sind.

Nach einer Ausführungsform der Erfindung kann das Substrat Cellulose enthalten.

Nach einer Ausführungsform der Erfindung kann das Substrat Mineralöl enthalten. Dies kann beispielsweise aus der Verwendung von Altpapier für das Substrat resultieren.

Nach einer Ausführungsform der Erfindung kann das Beschichtungsmaterial einen nukleophilen Stoff umfassen.

Nach einer Ausführungsform der Erfindung kann zwischen dem Substrat und der Beschichtung eine Zwischenschicht angeordnet sein. Diese Zwischenschicht kann die Haftung der Beschichtung verbessern.

Nach einer Ausführungsform der Erfindung kann zwischen dem Polyvinylalkohol und dem Vernetzungsmittel bei einem pH-Wert, der größer als 7 ist, ein Netzwerk ausgebildet werden. In diesem pH-Bereich kann die Farbe des Beschichtungsmaterials einfacher eingestellt werden.

Nach einer Ausführungsform der Erfindung kann das Beschichtungsmaterial durch ein Streichverfahren auf dem Substrat aufgebracht werden.

Nach einer Ausführungsform der Erfindung kann das Substrat vorgestrichen werden, bevor es mit dem Beschichtungsmaterial beschichtet wird.

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Darin zeigt:

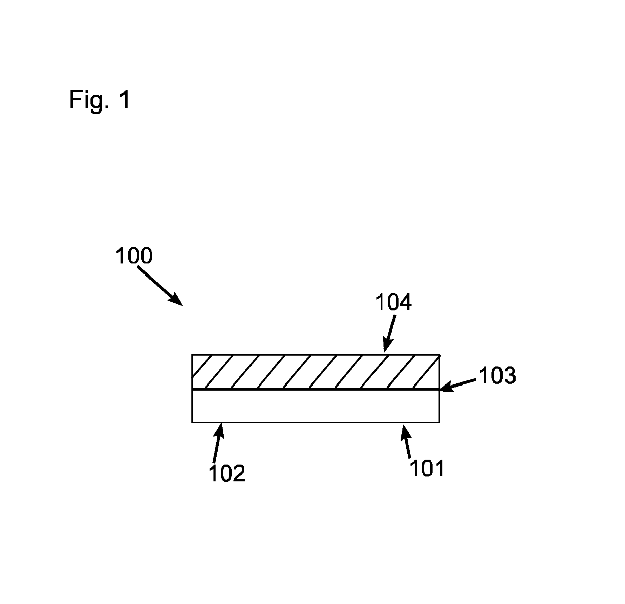

- Fig. 1: eine schematische Darstellung eines Verpackungsmaterials nach einer Ausführungsform der Erfindung.

Das Verpackungsmaterial 100 umfasst ein Substrat 101, das eine Außenseite 102 und eine Innenseite 103 aufweist. Die Außenseite 102 ist dabei üblicherweise vom Verpackungsgut weg gerichtet, während die Innenseite 103 dem Verpackungsgut zugewandt ist. Das Substrat 101 ist ein Papierprodukt, bei dem im Herstellungsprozess Altpapier eingesetzt wurde. Daher weist das Substrat 101 einen gewissen Anteil an Mineralölen auf. Um zu verhindern, dass das Mineralöl in Kontakt mit dem Verpackungsgut kommt, umfasst das Verpackungsmaterial 100 eine Beschichtung 104, die eine Barriereschicht für das Mineralöl darstellt, sodass die Gefahr einer Kontamination des Verpackungsguts mit Mineralöl verringert wird. Die Beschichtung ist daher an der Innenseite 103 des Substrats 101 angeordnet. Die Barrierefunktion kann beispielsweise durch einen Polyvinylalkohol erreicht werden. Des Weiteren ist es möglich, ein Netzwerk vorzusehen, das Polyvinylalkohol umfasst, um eine noch bessere Barrierefunktion zu erreichen.

Das Material der Beschichtung 104 umfasst Feststoffe, deren Anteil am Gesamtmaterial der Beschichtung 104 zumindest 30%, bevorzugterweise mindestens 35% oder mindestens 40% beträgt. Der Anteil kann dabei insbesondere in Gewichtsprozent gemessen werden. Durch diesen Feststoffanteil trocknet das Material der Beschichtung 104 besonders schnell. Es wird daher eine schnellere und günstigere Herstellung erreicht.

## Patentansprüche

1. Verpackungsmaterial (100) für ein Verpackungsgut, umfassend ein Substrat (101) und eine Beschichtung (104), wobei das Substrat (101) eine Außenseite (102) und eine Innenseite (103) aufweist, wobei die Beschichtung (104) auf der Innenseite (103) des Substrats (101) angeordnet ist, wobei die Beschichtung (104) aus einem Beschichtungsmaterial besteht, das Feststoffe umfasst,
**dadurch gekennzeichnet, dass**
der Anteil der Feststoffe am Beschichtungsmaterial mindestens 30%, beträgt.

2. Verpackungsmaterial (100) nach Anspruch 1 oder nach dem Oberbegriff des Anspruchs 1, **dadurch gekennzeichnet, dass** das Beschichtungsmaterial ein Bindemittel umfasst, wobei das Bindemittel einen Polyvinylalkohol und eine Polymerdispersion umfasst, und wobei der Polyvinylalkohol mit der Polymerdispersion mischbar ist.

3. Verpackungsmaterial (100) nach dem vorherigen Anspruch,
**dadurch gekennzeichnet, dass** das Beschichtungsmaterial ein Vernetzungsmittel umfasst, das zusammen mit dem Polyvinylalkohol ein Netzwerk bildet.

4. Verpackungsmaterial (100) nach dem vorherigen Anspruch,
**dadurch gekennzeichnet, dass** das Vernetzungsmittel Vinyltrimethoxysilane, Vinyltrimethoxyethoxysilane, Methacryloxypropyltrimethoxysilane, Acryloxypropyltrimethoxysilane, N-Methylolmethacrylamid, t-Butylacetoacetat und/oder ein Polyamidoaminepichlorhydrinharz umfasst.

5. Verpackungsmaterial (100) nach zumindest einem der drei vorherigen Ansprüche, **dadurch gekennzeichnet, dass** die Feststoffe Pigmente umfassen, wobei das Gewichtsverhältnis zwischen den Pigmenten und dem Polyvinylalkohol zumindest 1:1, vorzugsweise zumindest 1,5:1, beträgt.

6. Verpackungsmaterial (100) nach zumindest einem der vorherigen Ansprüche, **dadurch gekennzeichnet, dass** die Pigmente Kaolinplättchen und/oder Talkplättchen umfassen, wobei das Verhältnis des Durchmessers der Plättchen zur Dicke der Plättchen mindestens 50 ist.

7. Verpackungsmaterial (100) nach zumindest einem der vorherigen Ansprüche, **dadurch gekennzeichnet, dass** das Substrat Cellulose enthält.

8. Verpackungsmaterial (100) nach zumindest einem der vorherigen Ansprüche, **dadurch gekennzeichnet, dass** das Substrat Mineralöl enthält.

9. Verpackungsmaterial (100) nach zumindest einem der vorherigen Ansprüche, **dadurch gekennzeichnet, dass** das Beschichtungsmaterial einen nukleophilen Stoff umfasst.

10. Verpackungsmaterial (100) nach zumindest einem der vorherigen Ansprüche, **dadurch gekennzeichnet, dass** zwischen dem Substrat (101) und der Beschichtung (104) eine Zwischenschicht angeordnet ist.

11. Verpackung für ein Verpackungsgut, umfassend Verpackungsmaterial (100) nach zumindest einem der vorherigen Ansprüche, **dadurch gekennzeichnet, dass** die Innenseite (103) des Verpackungsmaterials (100) dem Verpackungsgut zugewandt ist.

12. Verfahren zur Herstellung von Verpackungsmaterial (100), umfassend die folgenden Schritte:
- Herstellung eines Substrats (101);
- Herstellung eines Beschichtungsmaterials, umfassend Feststoffe;
- Beschichtung des Substrats (101) mit dem Beschichtungsmaterial;
**dadurch gekennzeichnet, dass**
- der Anteil der Feststoffe am Beschichtungsmaterial mindestens 30% beträgt.

13. Verfahren nach dem vorherigen Anspruch, **dadurch gekennzeichnet, dass** das Beschichtungsmaterial einen Polyvinylalkohol und ein Vernetzungsmittel umfasst, wobei der Polyvinylalkohol mit dem Vernetzungsmittel bei einem pH-Wert, der größer als 7 ist, ein Netzwerk ausbildet.

14. Verfahren nach dem vorherigen Anspruch, **dadurch gekennzeichnet, dass** das Beschichtungsmaterial durch ein Streichverfahren auf dem Substrat aufgebracht wird.

15. Verfahren nach zumindest einem der drei vorherigen Ansprüche, **dadurch gekennzeichnet, dass** das Substrat vorgestrichen wird, bevor es mit dem Beschichtungsmaterial beschichtet wird.
